# FASCICULE DE BREVET EUROPEEN

(11) **EP 1 946 484 B1**
(45) Date de publication et mention de la délivrance du brevet: **30.12.2009**
(21) Numéro de dépôt: 06807589.4
(22) Date de dépôt: 26.10.2006
(51) Int. Cl.: H04L 12/18

(54) **RECEPTION DE CONTENUS AUDIOVISUELS A DESTINATION DE PLUSIEURS APPAREILS**
EMPFANG VON AN MEHRERE EINRICHTUNGEN ADRESSIERTEM AUDIOVISUELLEM INHALT
RECEPTION OF AUDIO-VISUAL CONTENT ADDRESSED TO SEVERAL DEVICES

(30) Priorité: 07.11.2005 FR 0553361
(43) Date de publication de la demande: 23.07.2008
(73) Titulaire: Thomson Licensing, 92100 Boulogne-Billancourt (FR)
(72) Inventeur: LETELLIER, Philippe, F-35760 Saint Gregoire (FR); HOUEIX, Pierre, F-35510 Cesson Sevigne (FR); FLEURY, Jean-François, F-56670 Riantec (FR)
(74) Mandataire: Le Dantec, Claude
(86) Numéro de dépôt international: PCT/EP2006/067836
(87) Numéro de publication internationale: WO 2007/051761

(56) Documents cités:
- WO-A-2004/003769
- LOESER CH ET AL: "Distributed Video-on-Demand Services on Peer-to-Peer Basis" PROCEEDINGS OF THE INTERNATIONAL WORKSHOP ON REAL-TIME LANS IN THE INTERNET AGE, juin 2002 (2002-06), pages 1-4, XP002304408

## Description

L'invention concerne un procédé de réception de documents audio et/ou audiovisuels à la demande d'utilisateurs, un serveur de distribution et des appareils mettant en oeuvre le procédé.

De nos jours, la diffusion de contenus audiovisuels à de multiples utilisateurs est de plus en plus répandue. Plusieurs solutions existent pour cela dont la diffusion sur des réseaux hertziens, satellitaires ou sur des réseaux de données. Ces derniers sont actuellement en plein essor, notamment avec le déploiement dans de nombreux réseaux d'accès haut débit à l'Internet grace à des technologies DSL (Digital Subscriber Line).
Sur ces réseaux de diffusion, la diffusion de programmes en direct, sans requête spécifique de la part de l'utilisateur est une technologie maîtrisée et bien supportée.
Le contexte réseau de la présente invention est celui des serveurs audiovisuels capables de fournir à la demande des documents audiovisuels, et de tout appareil (par exemple domestiques) capables de visualiser des documents audiovisuels reçus d'un réseau et dialoguant avec un serveur à l'aide de ce même réseau. Le document audiovisuel est typiquement transmis sur un réseau de diffusion unidirectionel. L'accès aux documents audiovisuels est généralement conditionné par un paiement de la part de l'utilisateur de l'appareil. Des Guides Electroniques de Programme (EPG en abrégé) proposent aux utilisateurs un catalogue de documents audiovisuels, et notamment des films. L'utilisateur choisit dans ce catalogue un document et après paiement du droit d'accès, reçoit les moyens permettant de le décoder et de le visualiser en clair. Le document est diffusé de façon cryptée sur le réseau de diffusion, et le récepteur décrypte le document grâce à un code préalablement reçu. Une autre façon de faire consiste à établir une liaison avec le serveur fournisseur de documents, à interroger son catalogue, et à télécharger le document à la suite d'un paiement. Dans ce cas, la liaison est en point à point, c'est-à-dire une liaison bidirectionnelle entre le serveur et l'utilisateur qui a demandé ce document, le document est téléchargé uniquement vers cet utilisateur. La liaison peut s'effectuer point à point (ou « unicast » en anglais). Le prix, qui est fixé par le fournisseur de documents, est généralement affiché par l'EPG ; l'utilisateur connaît donc le coût du téléchargement avant de s'engager. Ces systèmes, appelés en Anglais « Content on Demand », permettent à chaque abonné de sélectionner un document dans un catalogue, puis de le recevoir et de le visualiser, éventuellement le document est mémorisé.
Le document de LOESER Ch et Al. intitulé « Distributed Video-on-demand services on Peer-to-Peer Basis » publié en juin 2002 divulgue système basé sur la technologie du « Peer to peer ». Une telle architecture permet à un utilisateur de se connecter à un serveur donné et de télécharger un document. En fois transmis en entier, le document peut ensuite être téléchargé à d'autres utilisateurs.

Dans ce contexte, il convient de gérer de façon correctement la bande passante du réseau. Par opposition à la diffusion unidirectionnelle qui permet à plusieurs utilisateurs de recevoir le même contenu en ne le diffusant qu'une seule fois sur le réseau (la quantité de données supportée par le réseau ne dépend pas du nombre d'utilisateurs), la distribution de contenus à la demande établit un flux de données par demande (la quantité de données supportée par le réseau est alors proportionnelle aux nombres d'utilisateurs du service de contenus à la demande). La surconsommation de ressources réseau qu'entraîne un service de vidéo à la demande (quel que soit le réseau) est problématique et freine d'autant le déploiement de ce service.

La présente invention concerne un procédé de réception de documents audiovisuels émis à partir d'un serveur à destination d'au moins un premier récepteur, **caractérisé en ce qu**'il comporte les étapes suivantes :
- une étape d'établissement d'une liaison point à point entre un serveur et un premier appareil de réception pour la transmission d'une première partie d'un document suite à une requête de téléchargement dudit premier appareil,
- une étape d'établissement d'une liaison multipoint vers le premier appareil et vers au moins un second appareil pour recevoir une seconde partie du même document.

De cette façon, un second appareil peut recevoir au moins une partie du document transmis à un premier appareil, et ceci sans avoir besoin d'établir une seconde communication et occuper plus de bande passante que celle attribuer au premier appareil.
Selon un premier perfectionnement, le serveur émet vers le second appareil une proposition pour la réception de la seconde partie du document moyennant un prix inférieur à celui proposé au premier appareil. Le second appareil affiche des identificateurs des documents disponibles avec le prix. De cette façon, l'utilisateur est financièrement dédommagé de ne recevoir qu'une partie du document par rapport à l'utilisateur du premier appareil, ce dernier recevant la totalité du document. Selon un autre perfectionnement, le prix proposé par le serveur est proportionnel à la durée de la seconde partie du document. Ainsi, le rabais accordé pour recevoir qu'une partie du document est proportionnel à la durée de la partie manquante.
Selon un autre perfectionnement, la transmission de la seconde partie du document au second appareil est proposée jusqu'à ce qu'une partie prédéterminée du document soit diffusée. Ainsi, la proposition de transmettre une partie au moins du document n'intervient qu'au début du téléchargement du document, car ensuite les chances pour intéresser un utilisateur sont minces. Selon un autre perfectionnement, le second appareil reçoit un résumé dynamique au cours de la transmission du document, et affiche une partie au moins du résumé dynamique pour informer du contenu de la première partie du document déjà transmis au premier appareil. De cette façon, l'utilisateur du second appareil peut être mis au courant de la première partie du document avant de recevoir la seconde partie.
Selon un autre perfectionnement, le second appareil affiche une partie au moins dudit résumé dynamique après l'accord de recevoir une partie du document. L'affichage dudit résumé s'arrête lorsque le niveau de connaissance du résumé rejoint celui du document en cours de diffusion.
Selon un autre perfectionnement, le serveur établit une nouvelle liaison unicast pour transmettre au second appareil la première partie document, en même temps que la transmission multicast de la seconde partie. La seconde partie reçue est temporairement mémorisée dans l'appareil et extraite pour être visualisée à la suite de la première partie.
Selon une variante, consécutivement à la transmission de la seconde partie du document au deux appareils, la première partie du document est transmise à au moins un second appareil, de façon que ce second appareil reçoive l'ensemble du document. De cette façon, l'utilisateur du second appareil peut avoir connaissance de la partie manquante du document qu'il a commandé. Selon un autre perfectionnement, les première et seconde parties transmises du document reçu sont enregistrées au niveau du second appareil. Les deux parties du document enregistré sont ensuite visualisées dans le bon ordre. De cette façon, après la transmission et l'enregistrement des parties du document, l'utilisateur peut le voir dans de meilleures conditions.

La présente invention concerne également un serveur comportant une base de données contenant des documents, le serveur étant doté d'une interface pour transmettre une partie au moins d'un document en mode point à point et une interface pour transmettre une partie au moins du même document en mode multipoint vers une pluralité de récepteurs, **caractérisé en ce qu**'il comporte un moyen de réception d'une demande émise par un second récepteur pour recevoir le document actuellement en cours de transmission en mode point à point vers un premier récepteur, et un moyen de gestion des commutations pour arrêter la transmission en mode point à point vers le second récepteur et pour établir la transmission en mode multipoint vers les deux récepteurs de la partie non encore transmise du document.
La présente invention concerne également un récepteur audiovisuel comprenant un moyen de réception de documents, un moyen d'affichage d'un catalogue de documents et un moyen d'introduction de commandes,
**caractérisé en ce qu**'il comprend en outre un premier moyen de sélection d'un document entier déclenchant le moyen de réception pour recevoir ce document entier d'un émetteur à travers une liaison point à point,
un second moyen de sélection d'un document découpé en une première et seconde parties, le second moyen de sélection déclenchant le moyen de réception pour recevoir de l'émetteur la seconde partie du document à travers une liaison multipoint.

La présente invention concerne également un récepteur audiovisuel comprenant un moyen de réception de documents, un moyen d'affichage d'un document et un moyen d'introduction de commandes,
**caractérisé en ce qu**'il comprend en outre un premier moyen de réception d'une première partie d'un document par une liaison point à point, et un second moyen de réception d'une seconde partie du même document par une liaison multipoint permettant la transmission dudit document à d'autres appareils, le moyen d'affichage affichant la première partie puis la seconde partie.

La présente invention apparaîtra maintenant avec plus de détails dans le cadre de la description qui suit d'exemples de réalisation donnés à titre illustratif en se référant aux figures annexées parmi lesquelles :
- la figure 1 est un diagramme bloc d'un récepteur audiovisuel pour la mise en oeuvre de l'invention,
- la figure 2 est un schéma montrant les différents éléments d'un serveur selon l'invention,
- la figure 3 est un schéma montrant les différents éléments du système pour la distribution d'un document et les principaux échanges,
- la figure 4 illustre les différents dialogues entre deux utilisateurs et le serveur,
- la figure 5 représente une apparence d'écran permettant à un utilisateur de choisir un document.
- la figure 6 représente une apparence d'écran permettant à un utilisateur de choisir un document selon un perfectionnement de l'invention.

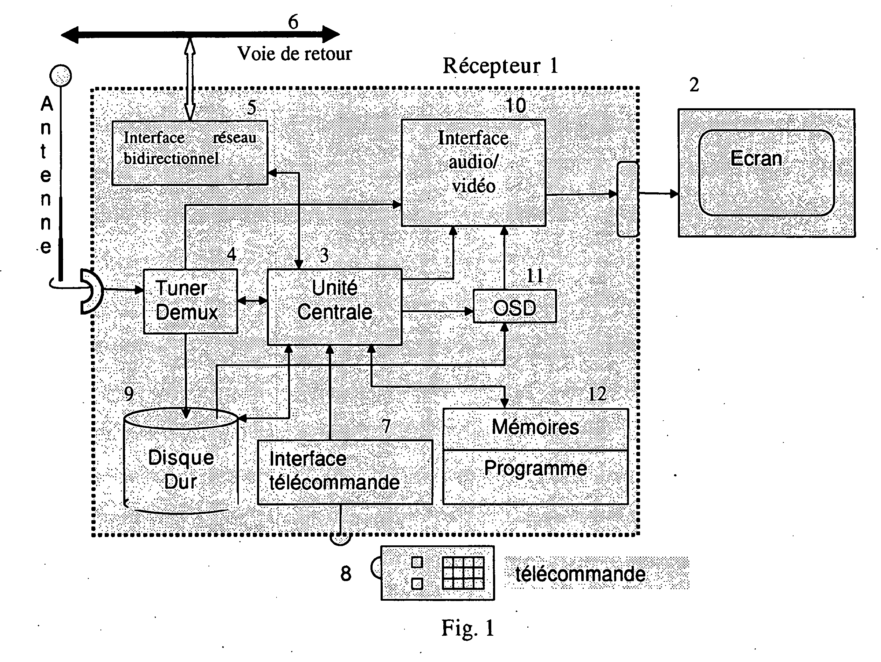

On décrira tout d'abord à l'aide de la figure 1, le fonctionnement d'un récepteur audiovisuel 1 muni d'un dispositif d'affichage 2. Le récepteur comprend une unité centrale 3 reliée à une mémoire 12 de programme (ROM) et de travail (RAM), et une interface 5 pour une communication bidirectionnelle avec un réseau 6. Cette interface est également appelée voie de retour. Ce réseau est par exemple un réseau Ethernet. Le récepteur peut également recevoir des données audio/vidéo d'un réseau de diffusion à travers une antenne de réception associée à un démodulateur 4. L'antenne peut également être remplacée par une connexion physique à tout type de bus numérique local à haut débit permettant de transmettre des données audio/vidéo en temps réel, tel qu'un point d'accès câble ou une connexion DSL. Le récepteur comprend en outre un récepteur de signaux 7 pour recevoir les signaux d'une télécommande 8, un moyen de mémorisation 9 pour le stockage d'au moins un document audiovisuel, et une logique de décodage audio/vidéo 10 pour la génération des signaux audiovisuels envoyés à l'écran de télévision 2. La nature des documents audiovisuels étant numérique, le moyen de mémorisation 9 est de préférence un disque dur (HDD), il peut aussi être un lecteur/enregistreur de disque optique enregistrable (DVD-RAM).
La télécommande 8 est dotée des touches de direction ↑, ↓, → et ← et des touches : « OK », « Achat » et « Envoi» dont nous verrons l'emploi plus loin dans la description. Le récepteur dispose également d'une horloge (non représentée) permettant de réveiller le récepteur lorsqu'un document à enregistrer est sur le point d'être téléchargé.
Le récepteur comprend également un circuit 11 d'affichage de données sur l'écran, appelé souvent circuit OSD, de l'anglais "On Screen Display" (signifiant littéralement "affichage sur l'écran"). Le circuit OSD 11 est un générateur de texte et de graphisme qui permet d'afficher à l'écran des menus, des pictogrammes (par exemple, un numéro correspondant à la chaîne visualisée), ou qui permet de mélanger deux contenus audiovisuels. Le circuit OSD est contrôlé par l'Unité Centrale 3 et un programme appelé « Programme de Commande de Contenus Audiovisuels », PCCA en abrégé qui est résident dans la mémoire 12. Le programme PCCA est typiquement constitué d'un module de programme inscrit en mémoire morte et de paramètres enregistrés en mémoire de travail. Le programme PCCA peut aussi être réalisé sous la forme d'un circuit spécialisé de type ASIC par exemple. Ce circuit peut être doté de fonctions sécuritaires permettant de réaliser un paiement suite à la décision d'un utilisateur de visualiser une émission payante.
Le récepteur reçoit des données d'identification de documents audiovisuels de la voie de retour 6 ou du réseau de diffusion. Ces données comprennent des éléments visualisables, le titre par exemple ou une image de la bande annonce. A l'aide d'un EPG et des touches de sa télécommande, l'utilisateur sélectionne une ou plusieurs documents en vue de les recevoir et de les enregistrer dans le disque dur 9.

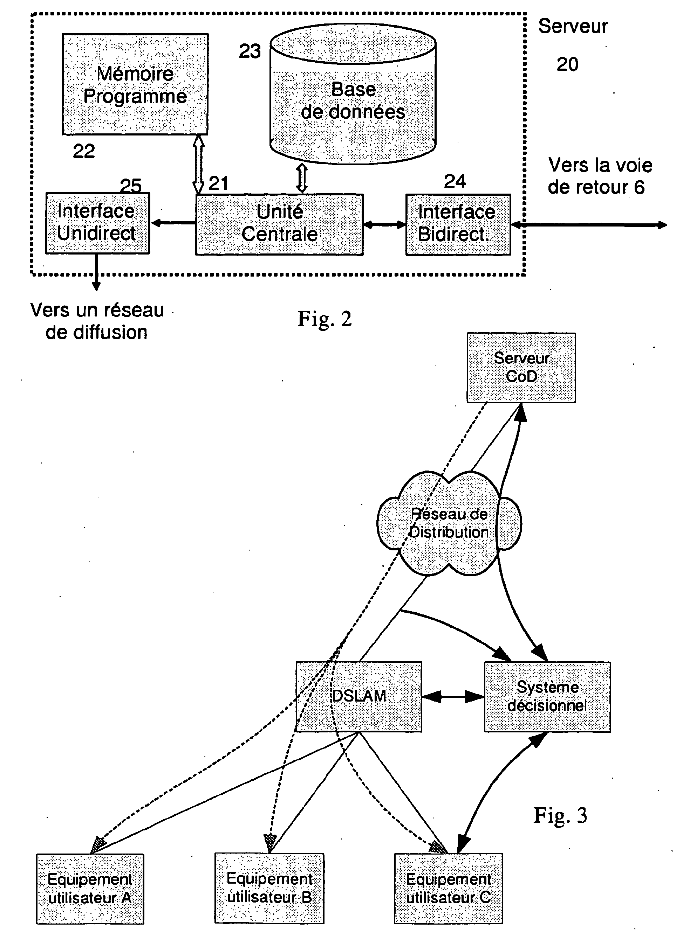

Le serveur 20 de contenus à la demande (CoD) décrit à la figure 2 comprend une unité centrale 21, une mémoire de programme 22 contenant le programme PCCA coté serveur, une mémoire contenant une base de données audiovisuelles 23 dans une zone de stockage réalisée préférentiellement par un disque dur ou un SAN et une interface de communication 24 pour établir des communications bidirectionnelles à travers le réseau bidirectionnel 6 avec les récepteurs 1 décrits précédemment. La base de données 23 contient notamment le catalogue des documents disponibles. Le serveur CoD est également en relation avec le gestionnaire du réseau de diffusion grâce à une interface 25. Il communique notamment à ce gestionnaire des ordres de diffusion des documents à des heures et dates déterminées. Selon un mode préféré de réalisation, les interfaces de communication unidirectionnelle 25 et bidirectionnelle 24 sont identiques et utilise le même réseau. La différenciation s'effectue au niveau des adresses de chaque trame de communication

Après avoir décrit les différents éléments de l'invention, nous allons maintenant expliquer comment ceux-ci coopèrent.
La figure 3 illustre les principaux éléments du système ainsi que les échanges entres ces éléments selon un exemple de réalisation. Le serveur CoD dialogue via un réseau de distribution avec un système décisionnel qui va accorder ou non le droit de télécharger à tel ou tel abonné. Le serveur Cod est connecté à un DSLAM 'de l'Anglais : « Digital Subscriber Line Access Multiplexer »). C'est un appareil permettant de relier un utilisateur à un réseau de données haut débit à travers la paire de conducteur électrique du réseau téléphonique public. Le DSLAM est un élément du réseau permettant entre autre de router le trafic IP et de faire la réplication de paquets multicast. Le système décisionnel permet de commander le passage de l'unicast au multicast. Le DSLAM doit être considéré comme un exemple de réalisation, tout autre routeur peut faire l'affaire.
Les abonnés qui disposent chacun d'un récepteur 1, peuvent établir des liaisons point à point avec le DSLAM et le système décisionnel. Les abonnés dialoguent avec le serveur CoD à travers le réseau de distribution.

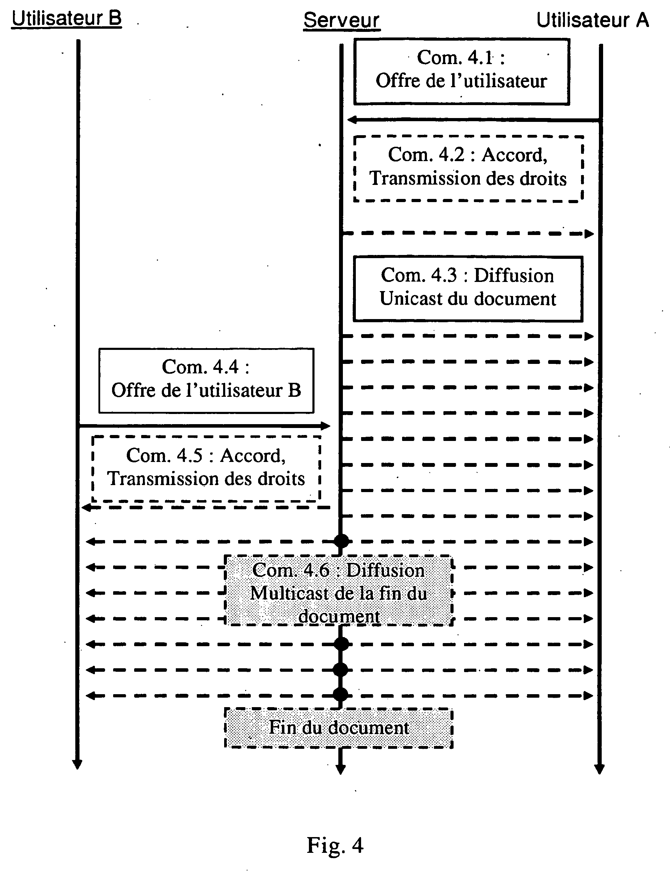

La figure 4 décrit les échanges entre le serveur CoD et deux récepteurs audiovisuels 1 appartenant à des abonnés. Les communications successives sont numérotées 4.1 à 4.6.
Supposons qu'au cours d'une communication. 4.1, un abonné A commande au serveur CoD un document à l'aide de son programme PCCA lancé sur son récepteur 1. Après avoir acquitté un certain montant M, une communication point à point (ou « unicast » en anglais) s'établit entre le serveur CoD et l'appareil de l'abonné A via le réseau de distribution, et le serveur accorde à l'appareil de l'abonné, le droit de recevoir le document (communication 4.2). Une communication unicast est caractérisée par le fait qu'elle s'effectue uniquement entre le serveur et un seul appareil déterminé. Dans le cas de communication sur le réseau IP, l'adresse contenue dans les trames de données émises par le serveur est celle de l'abonné A. Au cours d'une communication 4.3, le serveur transmet le document audiovisuel à l'abonné A qui peut le regarder.
Puis, après un laps de temps court par exemple quelques minutes plus tard, un autre abonné B fait une demande auprès du serveur CoD pour la même vidéo (communication 4.4), en utilisant également son programme PCCA. Le serveur CoD informe alors un système décisionnel (placé au niveau du DSLAM par exemple) de la possibilité d'établissement de 2 flux identiques mais décalés de 5 minutes au niveau du DSLAM.
Le système décisionnel va alors analyser l'utilisation actuelle du réseau en amont du DSLAM et va baser sur ces informations une offre de réduction du coût de la vidéo pour l'abonné B. Il va définir un montant M', inférieur à M, qui reflétera l'état du réseau. Si le réseau est peu chargé, la nécessité d'économiser la diffusion du même flux en parallèle est faible et donc la réduction sera peu importante (par exemple M' = M*80%). Par contre, si le réseau est proche de la saturation, la réduction peut être beaucoup plus importante pour inciter l'abonné B à choisir cette solution (par exemple M' = M*20%). En effet, puisque le réseau ne peut pas fournir un flux supplémentaire, si le nouvel abonné n'accepte pas la proposition à prix réduit, alors il ne pourra tout simplement pas regarder le film et une vente sera perdue.
Le système décisionnel avertit l'abonné B qu'un autre abonné du réseau a commandé le même document quelques minutes auparavant et que, s'il accepte de perdre les 5 premières minutes de la vidéo, il pourra recevoir le document souhaité. En contrepartie, il n'aura à payer que le montant M'.
Si l'abonné B refuse l'offre, un second flux unicast entre le serveur CoD et l'abonné B s'établit, immédiatement si cela est encore possible ou au moment où la bande passante du réseau le permet, car la consommation pour le réseau est donc de 2 fois la bande passante du flux.
Si l'abonné B accepte l'offre, le serveur transmet les droits de réception du document au cours de la communication 4.5. Le serveur définit alors un groupe de deux appareils pour la réception du document. Un flux ( ou « multicast » en Anglais) distribué aux abonnés A et B est alors mis en place depuis le serveur CoD (communication unidirectionnelle 4.6). L'abonné B peut alors commencer à regarder la vidéo. L'abonné A se connecte (sans interruption de la vidéo) sur ce flux multicast. Ensuite, la bande passante consommée est uniquement celle d'un flux, pour 2 abonnés.
A partir du moment où le système décisionnel informe le serveur que le flux multicast doit remplacer le flux unicast, ce dernier va envoyer en parallèle le flux unicast vers A et le flux multicast vers B uniquement (le routage pour B ayant été configuré par le système décisionnel), et ce pendant un laps de temps prédéterminé et court (de l'ordre de quelques secondes). Le récepteur A va de même être informé par un mécanisme asynchrone (de type RTSP, mécanisme souvent utilisé dans les systèmes de VoD) de la disponibilité du second flux multicast et il va alors pouvoir se connecter à ce nouveau flux multicast pour recevoir les données audiovisuelles. La requête d'abonnement va être traitée spécialement par le DSLAM qui aura été averti du changement de flux au préalable par le système décisionnel et qui aura mis en cache les données intermédiaires non encore envoyées au récepteur A. Le DSLAM stoppera le flux unicast et démarrera le flux multicast a destination de A lors de la réception de la requête d'abonnement. De cette façon, le lien entre le DSLAM et le récepteur A ne sera pas surchargé et il n'y aura ni perte ni doublons.

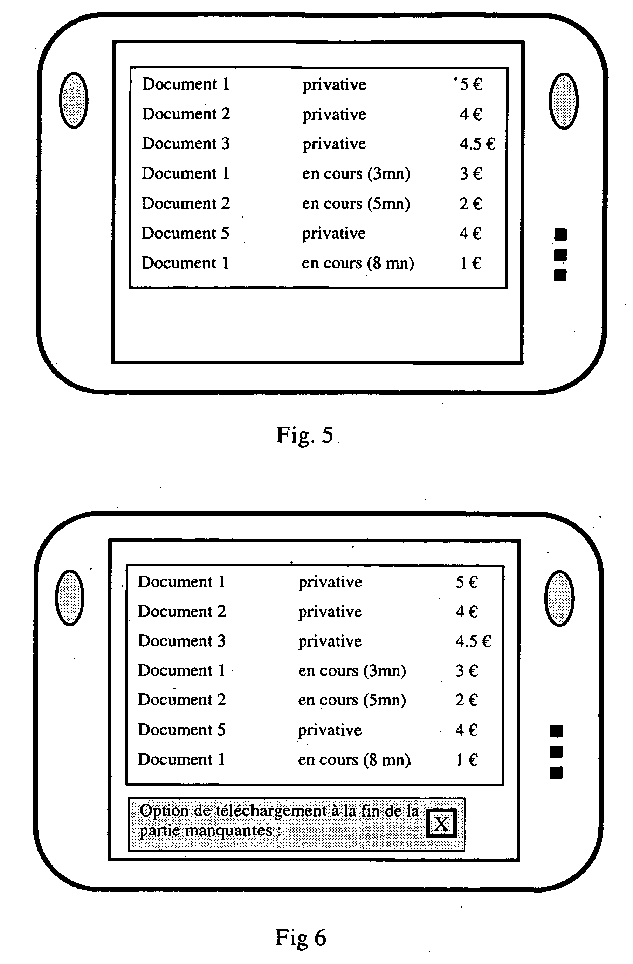

En théorie, l'offre peut s'effectuer à tout moment de la diffusion de la vidéo, mais pour que l'offre ait un intérêt commercial, le serveur ne peut la proposer que si la diffusion se trouve au cours des dix premiers pourcents de la diffusion totale du document, par exemple pour un document de 2 heures, il n'y a plus d'intérêt commercial de proposer l'offre lorsque 12 minutes de diffusion se sont écoulées. Il apparaît qu'une offre de réception d'un document tronqué de plus de 10 % n'a guère de chance d'être acceptée par un utilisateur, quel que soit le prix proposé.
Selon un mode préféré de réalisation, l'utilisateur B n'a pas connaissance au départ qu'un autre utilisateur (A en l'occurrence) reçoit déjà le document souhaité. Une variante de réalisation consiste en ce que l'utilisateur B voit sur son menu les identificateurs d'une partie au moins des documents disponibles, qu'ils soient ou non déjà commandés par un autre appareil, et donc en cours de téléchargement. La figure 5 présente un exemple de menu en guise d'illustration de cette variante. Ce menu élaboré par le programme PCCA de l'appareil de l'abonné B comporte un prix et la durée du document déjà diffusée. De cette manière, l'abonné B peut connaître la durée tronquée qu'il ne pourra recevoir s'il accepte cette offre. Avantageusement, le prix proposé est calculé proportionnellement à la durée tronquée du document. Par exemple, si l'abonné B manque 3 minutes au début du document alors le prix baisse de 10 %, et si l'abonné manque les 12 premières minutes, la réduction s'élève à 30 %. Les propositions faites sont limitées aux documents dont la diffusion n'a pas excédé une certaine durée, par exemple 10%, au-delà de laquelle on encombre l'EPG inutilement car très peu d'utilisateurs acceptent de telles offres. Dans le menu illustré par la figure 5, l'utilisateur B voit que les documents 1, 2, 3 et 5 sont disponibles et qu'il peut les commander pour lui. Ces documents sont marqués comme « privative » ce qui signifie qu'il va les recevoir personnellement et en entier, en établissant une liaison unicast avec le serveur. L'utilisateur voit également qu'il peut recevoir certain de ces documents diffusés depuis peu de temps. Les prix de ces documents sont alors réduits. Prenons le cas du document 1 dont la valeur est fixé à 5 € en mode Unicast, ce même document amputé des trois premières minutes ne vaut plus que 3 €, et amputé des 8 premières minutes, il ne vaut plus que 1€. Le document 2 en entier vaut 4 €, et amputé des 5 premières minutes, il ne vaut plus que 2 €. On voit donc que, plus la diffusion du document a commencé, plus le prix baisse. Avantageusement, le serveur peut élaboré une équation donnant le montant du document en fonction de la durée déjà diffusé. Soit les paramètres suivants, T : durée totale du film, t : temps écoulé depuis le début de la diffusion, P : prix du document entier, p : prix proposé compte tenu de la diffusion écoulé. Un exemple d'équation est : si t/T < 0.1 alors p = P x (1 - 8xt /T). Selon cet exemple, lorsque 10 % de document a été diffusé, l'offre consiste à proposer la partie restante à 80% du prix normal

Une amélioration de l'invention consiste à rajouter un flux temporaire unicast dans l'offre que fait le serveur à l'abonné B. Par exemple, le menu présentant l'offre de réception du document tronqué du début affiche ce qui est actuellement diffusé à l'abonné A en mode insertion d'image. De cette façon, cette visualisation d'une partie du document renforce l'intérêt pour l'abonné B. De plus s'il a déjà vu le document, il peut situer à quel moment se trouve la diffusion. Cette amélioration permet qu'en regardant le menu, il peut tout en prenant sa décision de télécharger ou non le document, prendre un peu connaissance de son contenu. La visualisation même partielle rajoute de l'intérêt commercial aux offres proposées par le menu. La visualisation en insertion est activée entre le serveur CoD et l'abonné B pendant qu'il fait son choix. La visualisation est limitée à la durée de l'offre, quelques minutes environ. L'apparence d'écran présentée dans la figure 5 est régulièrement mise à jour. Les prix changent et certains documents diffusés depuis trop longtemps disparaissent, par exemple les documents dont 10 % au moins ont été diffusés, ou des documents diffusés depuis plus de vingt minutes quelles que soient leurs durées.
Une autre amélioration de l'invention consiste en ce que en cas d'acceptation de la part de l'abonné B, le serveur lui propose un résumé dynamique de la partie tronquée du document. De cette manière, l'abonné B peut rapidement être mis au même niveau de connaissance du contenu du document actuellement reçu par l'abonné A. Une première variante consiste en ce que ce résumé est un flux unicast composé de séquences vidéo importantes caractéristiques de la partie tronquée. Eventuellement, ces séquences comporte un texte explicatif. Une seconde variante consiste en ce que, dès que l'abonné B accepte l'offre, l'abonné B reçoit un texte de résumé dynamique correspondant à la partie tronquée et le flux multicast s'établit pour les deux abonnés A et B. Un exemple de réalisation d'un résumé dynamique se trouve décrit dans la demande EP 1 100 271 déposée par la demanderesse. Puis, une application interactive affiche le résumé textuel sous la forme d'un bandeau en bas de l'écran. L'affichage d'une partie au moins dudit résumé dynamique s'interrompt lorsque le niveau de connaissance du résumé rejoint celui du document. Puis, l'application interactive s'arrête et disparaît de la mémoire du récepteur

Cet exemple n'est pas restrictif quant au nombre d'abonnés de type B qui peuvent se connecter au cours de la diffusion du document demandé par l'abonné A. Lors d'une période de forte demande, le soir par exemple, plusieurs utilisateurs pourraient demander le même flux dans des intervalles très réduits. Considérons maintenant l'exemple suivant :
L'abonné A fait la première demande à l'instant T pour un montant M. Selon le système précédemment décrit, si l'abonné B désire voir le même film à T+2minutes, le système décisionnel lui proposera une réduction. S'il accepte, le serveur CoD commute la diffusion du document sur un flux multicast et en informe les abonnés A et B. Pour A, la commutation s'effectue de façon transparente, le système de visualisation gérant de lui-même la réception du flux unicast en un flux multicast. Imaginons qu'un autre abonné C, veut voir le même film à T+4 minutes. Le système décisionnel peut alors lui proposer une réduction (identique ou non à celle de B) s'il accepte de perdre les 4 premières minutes de la vidéo. Le système est en effet toujours viable est même simplifié dans ce cas, car s'il accepte, il suffit de lui envoyer aussi le flux multicast : l'interaction est alors concentrée au niveau du DSLAM et aucun changement dans le flux n'est nécessaire chez les autres abonnés.
Ainsi, le nombre d'abonnés de ce système de distribution de documents n'est théoriquement pas limité.
Une autre amélioration de l'invention consiste en ce que le récepteur 1 possède un moyen de mémorisation d'une partie au moins d'un document diffusé et la fonction de décalage temporel (ou « time shift » en anglais). Cette fonction permet de recevoir un document en temps réel, de le mémoriser temporairement puis de le reproduire un certain temps après sa réception. Selon ce perfectionnement, lorsque le serveur établit une liaison multicast de façon que l'utilisateur B reçoive la seconde partie du document, il établit en même temps une liaison unicast vers l'appareil de l'utilisateur B pour que cet utilisateur puisse recevoir aussi la première partie du document. Puis, en même temps que l'utilisateur B voit la première partie, son récepteur mémorise la seconde partie transmise par la liaison multicast. Puis, lorsque la première partie est totalement transmise, le récepteur de B extrait les données audiovisuelles de la mémoire et visualise la seconde partie avec un décalage temporel égal à la durée de la première partie. De cette façon, l'utilisateur peut voir l'intégralité du document et ne s'aperçoit pas du changement du mode de réception : unicast et multicast.
Une autre amélioration de l'invention consiste en ce que le document demandé par l'abonné B est destiné à être intégralement enregistré pour être visualisé plus tard. L'appareil de l'abonné B enregistre alors le document en deux parties : une première partie qui commence au début du document et s'arrête à un moment Tcom où se produit la commutation d'un flux unicast à un flux multicast, et une seconde partie qui commence à Tcom et se termine à la fin du document.
Selon cette amélioration, le système décisionnel informe l'abonné B et lui propose qu'à la fin de la diffusion du document, la partie manquante sera diffusée. De cette façon, son récepteur pourra finalement enregistrer la totalité du document. Cette amélioration est illustrée par la figure 6. Les éléments du menu de la figure 5 sont conservés, le programme PCCA fait apparaître en bas de l'écran un bandeau de commande permettant à l'utilisateur de sélectionner l'option de téléchargement de la partie manquante. L'utilisateur sélectionne cette option et sa réponse est transmise au serveur. Si l'abonné B accepte l'offre en sélectionnant cette option, le serveur qui diffuse depuis un certain temps le document en mode unicast fera dans l'ordre les opérations suivantes :
- Arrêt de la diffusion du document en mode Unicast et diffusion de ce document en mode multicast, en même temps les appareils des abonnés A et B sont avertis de la nouvelle adresse du flux multicast.
- diffusion de la seconde partie du document en mode multicast.
- diffusion (pour le ou les abonnés de type B) de la première partie du document.
L'appareil de l'abonné B enregistre les deux parties du document et peut par la suite visualiser des deux parties dans le bon ordre.
Avantageusement, l'appareil de B avertit son utilisateur lorsque le serveur commence à diffuser la première partie du document et lui propose de commencer à le visualiser. Si l'utilisateur accepte en introduisant une commande, alors l'appareil de B affiche le contenu actuellement diffusé. Lorsque la première partie cesse d'être diffusé, l'appareil de B commute automatiquement et extrait la seconde partie du document de la mémoire. Ainsi, l'utilisateur voit le document dans sa totalité et la bande passante du réseau a été utilisée au maximum.

## Revendications

1. Procédé de réception de documents audiovisuels émis à partir d'un serveur à destination d'au moins un premier récepteur, **caractérisé en ce qu'**il comporte les étapes suivantes :
- une étape d'établissement (4.3) d'une liaison point à point entre un serveur et le premier récepteur pour la transmission d'une première partie d'un document suite à une requête de téléchargement dudit premier récepteur,
- une étape de réception par le serveur, d'une demande émise par un second récepteur pour recevoir le document actuellement en cours de transmission en mode point à point,
- une étape d'arrêt de la transmission en mode point à point
- une étape d'établissement (4.6) d'une liaison multipoint vers au moins les deux récepteurs pour recevoir une seconde partie du même document.

2. Procédé de réception de documents selon la revendication 1, **caractérisé en ce qu'**il comporte une étape de transmission par le serveur vers un second récepteur d'une proposition pour la réception de la seconde partie du document moyennant une valeur de prix inférieur à celle proposée au premier récepteur et une étape d'affichage au niveau du second récepteur des identificateurs des documents disponibles avec la valeur de prix.

3. Procédé de réception de documents selon la revendication 2, **caractérisé en ce que** la valeur de prix proposée par le serveur est proportionnelle à la durée de la seconde partie du document.

4. Procédé de réception de documents selon l'une quelconque des revendications 1 à 3, **caractérisé en ce que** la transmission de la seconde partie du document est proposée à un second récepteur jusqu'à la transmission d'une partie prédéterminée du document au premier récepteur.

5. Procédé de réception de documents selon l'une quelconque des revendications précédentes, **caractérisé en ce qu'**il comporte la transmission d'un résumé dynamique dudit document, et une étape d'affichage au niveau d'un second récepteur d'une partie au moins dudit résumé dynamique pour informer du contenu de la première partie du document déjà transmise au premier récepteur.

6. Procédé de réception de documents selon la revendication 5, **caractérisé en ce que** l'étape d'affichage d'une partie au moins dudit résumé dynamique intervient après l'acceptation par le second récepteur de recevoir une partie du document, l'affichage s'interrompant lorsque le niveau de connaissance du résumé rejoint celui du document en cours de diffusion.

7. Procédé de réception de documents selon l'une quelconque des revendications précédentes, **caractérisé en ce qu'**il comporte une étape de transmission de la première partie du document à au moins un second récepteur concomitamment à la transmission de la seconde partie du document aux deux récepteurs, et une étape de mémorisation de la seconde partie reçue dans le second récepteur, le second récepteur visualisant d'abord la première partie lors de la réception, puis la seconde partie en lisant le contenu mémorisé.

8. Procédé de réception de documents selon l'une quelconque des revendications 1 à 6, **caractérisé en ce qu'**il comporte une étape de transmission de la première partie du document à au moins un second récepteur consécutivement à la transmission de la seconde partie du document aux deux récepteurs, de façon que le second récepteur reçoive l'ensemble du document.

9. Serveur (20) comportant une base de données (2.3) contenant des documents, le serveur étant doté d'une interface (24) pour transmettre une partie au moins d'un document en mode point à point et une interface (25) pour transmettre une partie au moins du même document en mode multipoint vers une pluralité de récepteurs (1), **caractérisé en ce qu'**il comporte un moyen de réception (24) d'une demande émise par un second récepteur pour recevoir le document actuellement en cours de transmission en mode point à point vers un premier récepteur, et un moyen de gestion des communications (21, 22) pour arrêter la transmission en mode point à point vers le second récepteur et pour établir la transmission en mode multipoint vers les deux récepteurs de la partie non encore transmise du document.

10. Serveur (20) selon la revendication 10, **caractérisé en ce que** en réponse à une demande de téléchargement du document à un second récepteur, l'interface (24) transmet en mode point à point vers un second récepteur une proposition pour la réception de la seconde partie du document moyennant une valeur de prix inférieur à celle proposée au premier récepteur.

11. Serveur (20) selon l'une quelconque des revendications 9 et 10, **caractérisé en ce que** le moyen de gestion des communications (21,22) n'établit une transmission en mode multipoint qu'au cours de la transmission d'une partie prédéterminée du document aux premier et au second récepteurs.

12. Serveur (20) selon l'une quelconque des revendications 9 à 11, **caractérisé en ce qu'**il comporte un moyen d'émission (24 ; 25) d'un résumé dynamique dudit document, le résumé correspondant à la partie du document déjà transmise au premier récepteur.

13. Serveur (20) selon l'une quelconque des revendications 9 à 12, **caractérisé en ce qu'**il comporte un moyen de transmission (24 ; 25) de la première partie du document à au moins un second récepteur consécutivement à la transmission complète de la seconde partie du document.

14. Récepteur audiovisuel (1) comprenant un moyen de réception de documents (4 ; 5), un moyen d'affichage (10, 11) d'un catalogue de documents et un moyen d'introduction de commandes (7,8),
**caractérisé en ce qu'**il comprend en outre un premier moyen de sélection (3, 7, 8, 12) d'un document entier déclenchant le moyen de réception (3, 5, 12) pour recevoir ce document entier d'un émetteur (20) à travers une liaison point à point,
un second moyen de sélection (3, 7, 8, 12) d'un document découpé en une première et seconde parties, le second moyen de sélection déclenchant le moyen de réception (3, 5, 12) pour recevoir de l'émetteur (20) la seconde partie du document à travers une liaison multipoint permettant la transmission de cette seconde partie du document à d'autres récepteurs.

15. Récepteur audiovisuel (1) selon la revendication 14, **caractérisé en ce qu'**il comporte un moyen de réception (3, 5, 12) d'une liste de documents en cours de diffusion vers d'autres récepteurs et le moyen d'affichage (10, 11) affichant cette liste.

16. Récepteur audiovisuel (1) selon l'une quelconque des revendications 14 et 15, **caractérisé en ce qu'**il comporte un moyen de réception d'un résumé dynamique de la première partie du document, et le moyen d'affichage (10, 11) affichant ledit résumé dynamique pour informer du contenu de la partie du document déjà transmise au récepteur.

17. Récepteur audiovisuel (1) selon la revendication 16, **caractérisé en ce que** le moyen d'affichage (10, 11) dudit résumé dynamique est activé lors de la réception de la seconde partie du document à travers la liaison multipoint, l'affichage du résumé s'interrompant lorsque le niveau de connaissance du résumé rejoint celui du document transmis.

18. Récepteur audiovisuel (1) selon l'une quelconque des revendications 14 à 17, **caractérisé en ce que** le moyen de réception (3, 5, 12) reçoit en même temps la première partie du document et la seconde partie du document aux deux récepteurs, le récepteur comporte en outre un moyen de mémorisation (9) pour mémoriser au moins la seconde partie reçue par la liaison multipoint le moyen d'affichage (10, 11) visualisant d'abord la première partie reçue par le moyen de réception (3,5,12), puis la seconde partie extraite du moyen de mémorisation (9).

19. Récepteur audiovisuel (1) comprenant un moyen de réception de documents (4 ; 5), un moyen d'affichage (10, 11) d'un document et un moyen d'introduction de commandes (7,8),
**caractérisé en ce qu'**il comprend en outre un premier moyen de réception (5, 3, 12) d'une première partie d'un document par une liaison point à point, et un second moyen de réception (5, 3, 12) d'une seconde partie du même document par une liaison multipoint permettant la transmission dudit document à un récepteur qui en fait la demande au cours de la transmission de la première partie, le moyen d'affichage (10,11) affichant la première partie puis la seconde partie.

## Claims

1. Method for receiving audiovisual documents sent by a server to at least one receiver, **characterized in that** it comprises the following steps:
- a step of establishing a unicast link (4.3) between a server and the first receiver for the transmission of the first part of a document following a download request of said first receiver,
- a step of receiving by the server, a request sending by a second receiver for receiving the documents currently transmitted by a unicast link,
- a step of ending of the transmission by a unicast link,
- a step of establishing a multicast link (4.6) to at least the two receivers to receive a second part of the same document.

2. Document reception method according to claim 1, **characterized in that** it comprises a step of transmission by the server to a second receiver of a proposal for the reception of a second part of a document for a price value less than the one proposed to the first receiver and a display step at the level of the second receiver of the identifiers of the documents available with the price value.

3. Document reception method according to claim 2, **characterized in that** the price value proposed by the server is proportional to the duration of the second part of the document.

4. Document reception method according to any of claims 1 to 3, **characterized in that** the transmission of the second part of the document is proposed to a second receiver up to the transmission of a predetermined part of the document to the first receiver.

5. Document reception method according to any one of the aforementioned claims, **characterized in that** it comprises the transmission of a dynamic summary of said document, and a display step at the level of a second receiver of at least part of said dynamic summary to provide information on the contents of the first part of the document already transmitted to the first receiver.

6. Document reception method according to claim 5, **characterized in that** the display step of at least part of said dynamic summary occurs after acceptance by the second receiver to receive a part of the document, the display being interrupted when the level of knowledge of the summary joins that of the document being broadcast.

7. Document reception method according to any one of the aforementioned claims, **characterized in that** it comprises a step of transmission of the first part of the document to at least a second receiver concomitantly with the transmission of the second part of the document to the two receivers, and a step of memorization of the second part received by the second receiver, the second receiver first displaying the first part during the reception then the second part reading the stored content.

8. Document reception method according to any one of claims 1 to 6, **characterized in that** it comprises a step of transmission of the first part of the document to a least a second receiver consecutively with the transmission of the second part of the document to the two receivers, so that the second receiver receives the entire document.

9. Server (20) comprising a database (23) containing documents, the server having an interface (24) to transmit at least part of a document in unicast mode and an interface (25) to transmit at least part of the same document in multicast mode to a plurality of receivers (1), **characterized in that** it comprises a means (24) of receiving a request sent by a second receiver to receive a document currently being transmitted in unicast mode to a first receiver, and a communication management means (21, 22) to stop the transmission in unicast mode to the second receiver and to establish the transmission in multicast mode to the two receivers of the part of the document not yet transmitted.

10. Server (20) according to claim 10, **characterized in that** in response to a request to download a document to a second receiver, the interface (24) transmits in unicast mode to a second receiver a proposal for the reception of the second part of the document for a price less than the price proposed to the first receiver.

11. Server (20) according to any one of claims 9 and 10, **characterized in that** the means of communications management (21, 22) only establishes a transmission in multicast mode during the transmission of a predetermined part of the document to the first receiver and the second receiver.

12. Server (20) according to any one of claims 9 to 11, **characterized in that** it comprises a means of transmission (24, 25) of a dynamic summary of said document, the summary corresponding to the part of the document already transmitted to the first receiver.

13. Server (20) according to any one of claims 9 to 12, **characterized in that** it comprises a means of transmission (24, 25) of the first part of the document to at least a second receiver following the complete transmission of the second part of the document.

14. Audiovisual receiver (1) comprising a means of receiving documents (4, 5), a means of displaying (10, 11) a catalogue of documents and a means of introducing commands (7, 8),
**characterized in that** it also comprises a first selection means (3, 7, 8, 12) of an entire document triggering the reception means (3, 5, 12) to receive this entire document from a transmitter (20) via a unicast link,
a second selection means (3, 7, 8, 12) of a document split into a first and second parts, the second selection means triggering the reception means (3, 5, 12) to receive the second part of the document from the transmitter (20) via a multicast link allowing the transmission of this second part of the document to others receivers.

15. Audiovisual receiver (1) according to claim 14, **characterized in that** it comprises a reception means (3, 5, 12) of a list of documents being broadcast to other receivers, the display means (10, 11) displaying this list.

16. Audiovisual receiver (1) according to any one of claims 14 and 15, **characterized in that** it comprises a reception means of a dynamic summary of the first part of the document, the display means (10, 11) displaying said dynamic summary to provide information on the content of the part of the document already transmitted to the receiver.

17. Audiovisual receiver (1) according to claim 16, **characterized in that** the display means (10, 11) of said dynamic summary is activated during the reception of the second part of the document via the multicast link, the display of the summary being interrupted when the level of knowledge of the summary joins that of the transmitted document.

18. Audiovisual receiver (1) according to any of claims 14 to 17, **characterized in that** the reception means (3, 5, 12) receives, at the same time, the first part of the document and the second part of the document at both receivers, the receiver further comprises a memorization means (9) to memorize at least the second part received via the multicast link, the display means (10, 11) first displaying the first part received by the reception means (3, 5, 12), then the second part extracted from the memorization means (9).

19. Audiovisual receiver (1) comprising a means of receiving documents (4, 5), a means of displaying (10, 11) a document and a means of introducing commands (7, 8),
**characterized in that** it also comprises a first reception means (5, 3, 12) of a first part of a document via a unicast link, and a second reception means (5, 3, 12) of a second part of the same document via a multicast link, allowing the transmission of said document to another receiver which applies the request during the transmission of the first part, the display means (10, 11) displaying the first part then the second part.

## Patentansprüche

1. Verfahren für den Empfang von audiovisuellen Dokumenten, die von einem Server aus an mindestens einen ersten Empfänger gesendet werden, **dadurch gekennzeichnet, dass** es die folgenden Schritte umfasst:
- einen Schritt der Herstellung (4.3) einer Punkt-zu-Punkt-Verbindung zwischen einem Server und dem ersten Empfänger für die Übertragung eines ersten Teils eines Dokuments aufgrund einer Herunterladeanfrage des ersten Empfängers,
- einen Schritt des serverseitigen Empfangens einer Anfrage, die von einem zweiten Empfänger gesendet wird, um das aktuell im Punkt-zu-Punkt-Modus übertragene Dokument zu empfangen,
- einen Schritt des Abbrechens der Übertragung im Punkt-zu-Punkt-Modus,
- einen Schritt der Herstellung (4.6) einer Multipunkt-Verbindung zu mindestens den zwei Empfängern, um einen zweiten Teil desselben Dokuments zu empfangen.

2. Verfahren für den Empfang von Dokumenten nach Anspruch 1, **dadurch gekennzeichnet, dass** es einen Schritt der Übertragung, durch den Server zu einem zweiten Empfänger, eines Angebots für den Empfang des zweiten Teils des Dokuments zu einem Preis, der niedriger ist, als derjenige, der dem ersten Empfänger angeboten wird, und einen Schritt der Anzeige der Kennungen der verfügbaren Dokumente mit dem Preis an dem zweiten Empfänger umfasst.

3. Verfahren für den Empfang von Dokumenten nach Anspruch 2, **dadurch gekennzeichnet, dass** der von dem Server angebotene Preis proportional zu der Dauer des zweiten Teils des Dokuments ist.

4. Verfahren für den Empfang von Dokumenten nach einem der Ansprüche 1 bis 3, **dadurch gekennzeichnet, dass** die Übertragung des zweiten Teils des Dokuments einem zweiten Empfänger bis zur Übertragung eines vorbestimmten Teils des Dokuments an den ersten Empfänger angeboten wird.

5. Verfahren für den Empfang von Dokumenten nach einem der vorhergehenden Ansprüche, **dadurch gekennzeichnet, dass** es die Übertragung einer dynamischen Zusammenfassung des Dokuments und einen Schritt der Anzeige, an einem zweiten Empfänger, mindestens eines Teils der dynamischen Zusammenfassung umfasst, um über den Inhalt des ersten, bereits an den ersten Empfänger übertragenen Teils des Dokuments zu informieren.

6. Verfahren für den Empfang von Dokumenten nach Anspruch 5, **dadurch gekennzeichnet, dass** der Schritt der Anzeige mindestens eines Teils der dynamischen Zusammenfassung erfolgt, nachdem der zweite Empfänger den Empfang eines Teils des Dokuments akzeptiert hat, wobei die Anzeige unterbrochen wird, wenn der Kenntnisstand der Zusammenfassung demjenigen des aktuell ausgesendeten Dokuments entspricht.

7. Verfahren für den Empfang von Dokumenten nach einem der vorhergehenden Ansprüche, **dadurch gekennzeichnet, dass** es einen Schritt der Übertragung des ersten Teils des Dokuments an mindestens einen zweiten Empfänger gleichzeitig mit der Übertragung des zweiten Teils des Dokuments an die zwei Empfänger und einen Schritt des Speicherns des zweiten, in dem zweiten Empfänger empfangenen Teils umfasst, wobei der zweite Empfänger zunächst den ersten Teil beim Empfang und anschließend unter Lesen des gespeicherten Inhalts den zweiten Teil anzeigt.

8. Verfahren für den Empfang von Dokumenten nach einem Ansprüche 1 bis 6, **dadurch gekennzeichnet, dass** es einen Schritt der Übertragung des ersten Teils des Dokuments an mindestens einen zweiten Empfänger in Anschluss an die Übertragung des zweiten Teils des Dokuments an die zwei Empfänger, so dass der zweite Empfänger das gesamte Dokument empfängt.

9. Server (20) mit einer Dokumente enthaltenden Datenbank (2.3), wobei der Server mit einer Schnittstelle (24) für die Übertragung mindestens eines Teils eines Dokuments im Punkt-zu-Punkt-Modus und einer Schnittstelle (25) für die Übertragung mindestens eines Teils desselben Dokuments im Multipunkt-Modus an eine Vielzahl von Empfängern (1) versehen ist, **dadurch gekennzeichnet, dass** er ein Mittel für den Empfang (24) einer Anfrage umfasst, die von einem zweiten Empfänger gesendet wird, um das aktuell im Punkt-zu-Punkt-Modus an einen ersten Empfänger übertragene Dokument zu empfangen, und ein Mittel für die Verwaltung der Kommunikationen (21, 22), um die Übertragung im Punkt-zu-Punkt-Modus an den zweiten Empfänger abzubrechen und um die Übertragung im Multipunkt-Modus an die zwei Empfänger des noch nicht übertragenen Teils des Dokuments herzustellen.

10. Server (20) nach Anspruch 10, **dadurch gekennzeichnet, dass** auf eine Anfrage zum Herunterladen des Dokuments auf einen zweiten Empfänger hin die Schnittstelle (24) ein Angebot für den Empfang des zweiten Teils des Dokuments zu einem Preis, der geringer ist, als derjenige, der dem ersten Empfänger angeboten wird, im Punkt-zu-Punkt-Modus an einen zweiten Empfänger überträgt.

11. Server (20) nach einem der Ansprüche 9 und 10, **dadurch gekennzeichnet, dass** das Mittel zur Verwaltung der Kommunikationen (21, 22) eine Übertragung im Multipunkt-Modus erst während der Übertragung eines vorgegebenen Teils des Dokuments an den ersten und zweiten Empfänger herstellt.

12. Server (20) nach einem der Ansprüche 9 bis 11, **dadurch gekennzeichnet, dass** er ein Mittel zum Senden (24; 25) einer dynamischen Zusammenfassung des Dokuments umfasst, wobei die Zusammenfassung dem Teil des Dokuments entspricht, der bereits an den ersten Empfänger übertragen wurde.

13. Server (20) nach einem der Ansprüche 9 bis 12, **dadurch gekennzeichnet, dass** er ein Mittel zum Senden (24; 25) des ersten Teils des Dokuments an mindestens einen zweiten Empfänger in Anschluss an die vollständige Übertragung des zweiten Teils des Dokuments umfasst.

14. Audiovisueller Empfänger (1) mit einem Mittel für den Empfang von Dokumenten (4; 5), einem Mittel für die Anzeige (10, 11) eines Dokumentenkatalogs und einem Mittel für die Eingabe von Befehlen (7, 8),
**dadurch gekennzeichnet, dass** er ferner ein erstes Mittel für die Auswahl (3, 7, 8, 12) eines vollständigen Dokuments, welches das Empfangsmittel (3, 5, 12) auslöst, um dieses vollständige Dokument von einem Sender (20) über eine Punkt-zu-Punkt-Verbindung zu empfangen, und ein zweites Mittel für die Auswahl (3, 7, 8, 12) eines Dokuments, das in einen ersten und zweiten Teil geschnitten ist, umfasst, wobei das zweite Auswahlmittel das Empfangsmittel (3, 5, 12) auslöst, um von dem Sender (20) den zweiten Teil des Dokuments über eine die Übertragung dieses zweiten Teils des Dokuments an weitere Empfänger ermöglichende Multipunkt-Verbindung zu empfangen.

15. Audiovisueller Empfänger (1) nach Anspruch 14, **dadurch gekennzeichnet, dass** er ein Mittel für den Empfang (3, 5, 12) einer Liste von Dokumenten, die gerade an weitere Empfänger ausgesendet werden, und ein Mittel für die Anzeige (10, 11) dieser Liste umfasst.

16. Audiovisueller Empfänger (1) nach einem der Ansprüche 14 und 15, **dadurch gekennzeichnet, dass** er ein Mittel für den Empfang einer dynamischen Zusammenfassung des ersten Teils des Dokuments und ein Mittel für die Anzeige (10, 11) der dynamischen Zusammenfassung umfasst, um über den Inhalt des bereits an den Empfänger übertragenen Teils des Dokuments zu informieren, umfasst.

17. Audiovisueller Empfänger (1) nach Anspruch 16, **dadurch gekennzeichnet, dass** das Mittel für die Anzeige (10, 11) der dynamischen Zusammenfassung beim Empfang des zweiten Teils des Dokuments über die Multipunkt-Verbindung aktiviert wird, wobei die Anzeige der Zusammenfassung unterbrochen wird, wenn der Kenntnisstand der Zusammenfassung demjenigen des übertragenen Dokuments entspricht.

18. Audiovisueller Empfänger (1) nach einem der Ansprüche 14 bis 17, **dadurch gekennzeichnet, dass** das Empfangsmittel (3, 5, 12) den ersten Teil des Dokuments und den zweiten Teil des Dokuments an beiden Empfängern gleichzeitig empfängt, wobei der Empfänger ferner ein Speichermittel (9) umfasst, um mindestens den über die Multipunkt-Verbindung empfangenen zweiten Teil zu speichern, wobei das Anzeigemittel (10, 11) zuerst den ersten, von dem Empfangsmittel (3, 5, 12) empfangenen Teil und anschießend den zweiten, aus dem Speichermittel (9) ausgelesenen Teil anzeigt.

19. Audiovisueller Empfänger (1) mit einem Mittel für den Empfang (4; 5) von Dokumenten, einem Mittel für die Anzeige (10, 11) eines Dokuments und einem Mittel für die Eingabe von Befehlen (7, 8),
**dadurch gekennzeichnet, dass** er ferner ein erstes Mittel für den Empfang (5, 3, 12) eines ersten Teils eines Dokuments über eine Punkt-zu-Punkt- Verbindung und ein zweites Mittel für den Empfang (5, 3, 12) eines zweiten Teils desselben Dokuments über eine Multipunkt-Verbindung umfasst, welche die Übertragung des Dokuments an einen Empfänger ermöglicht, welcher während der Übertragung des ersten Teils entsprechend anfragt, wobei das Anzeigemittel (10, 11, 12) den ersten Teil und anschließend den zweiten Teil anzeigt.
